(19) Europäisches Patentamt / European Patent Office / Office européen des brevets

(11) **EP 2 745 437 B1**

(12) **EUROPEAN PATENT SPECIFICATION**

(45) Date of publication and mention of the grant of the patent:
**08.08.2018 Bulletin 2018/32**

(51) Int Cl.:
*H04J 3/06* (2006.01)   *H04W 56/00* (2009.01)
*H04W 84/18* (2009.01)   *H04W 74/04* (2009.01)

(21) Application number: **13742746.4**

(22) Date of filing: **06.06.2013**

(86) International application number:
**PCT/IB2013/054653**

(87) International publication number:
**WO 2013/183020 (12.12.2013 Gazette 2013/50)**

(54) **METHOD OF TRANSMISSION BETWEEN NODES OF A MANET COMMUNICATION NETWORK OPERATING ON AN HF BAND WITH TDMA SHARING OF THE RADIO CHANNEL**

VERFAHREN ZUR ÜBERTRAGUNG ZWISCHEN KNOTEN EINES MANET-KOMMUNIKATIONSNETZES MIT BETRIEB IN EINEM HF-BAND MIT GEMEINSAMER TDMA-NUTZUNG DES FUNKKANALS

PROCÉDÉ POUR TRANSMISSION ENTRE DES NOEUDS D'UN RÉSEAU DE COMMUNICATION MANET OPÉRANT SUR UNE BANDE HF AVEC PARTAGE TDMA DU CANAL RADIO

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **06.06.2012 IT TO20120493**

(43) Date of publication of application:
**25.06.2014 Bulletin 2014/26**

(73) Proprietor: **LEONARDO S.P.A.**
**00195 Roma (IT)**

(72) Inventors:
• **POGGI, Maurizio**
  **I-00142 Roma (IT)**
• **TITTONI, Patrizia**
  **I-00142 Roma (IT)**
• **DE DOMENICO, Maurizio**
  **I-00042 Anzio (Roma) (IT)**

(74) Representative: **Deambrogi, Edgardo et al**
**Corso Emilia 8**
**10152 Torino (IT)**

(56) References cited:
**EP-A2- 1 901 458**      **WO-A2-2009/024945**
**US-A1- 2010 329 221**

**Description**

The present invention relates to radio communication systems, and more particularly to improvements in data transmission in a MANET communication network.

Specifically, the invention relates to a method of transmission according to the precharacterizing clause of Claim 1.

Reliable data communication over networks of terminals, such as networks of computers in the possession of professional operators, is advantageously provided by means of wired networks, which include linking sections implemented in fibre optics and paired telephone lines. However, if a wired network structure is unavailable, or if it is not convenient to create a structure of this type between the various terminals without physical work on the structures of the buildings in which they are located, a different transmission means must be used for the data communication, i.e. communication must be provided via radio.

Over a number of years there has been an increasing demand for private-access radio communication networks for radio communication applications for professional purposes, for example from public security forces, managers of public utility services, or simply businesses which need to manage large numbers of terminals operating on a mobile basis within local areas.

Professional mobile radio communication systems provide communication services, including data transmission services, to closed user groups, and meet the communication requirements of public or private organizations whose structure requires connections between a limited number of units distributed over a territory.

A MANET (Mobile Ad hoc NETwork) communication network is a communication network composed of mobile terminals communicating with each other over multi-hop wireless links, without the presence of a fixed network infrastructure. The nodes of the network, being freely movable, form a continually evolving graph of arbitrary shape, and the network topology varies rapidly and unpredictably.

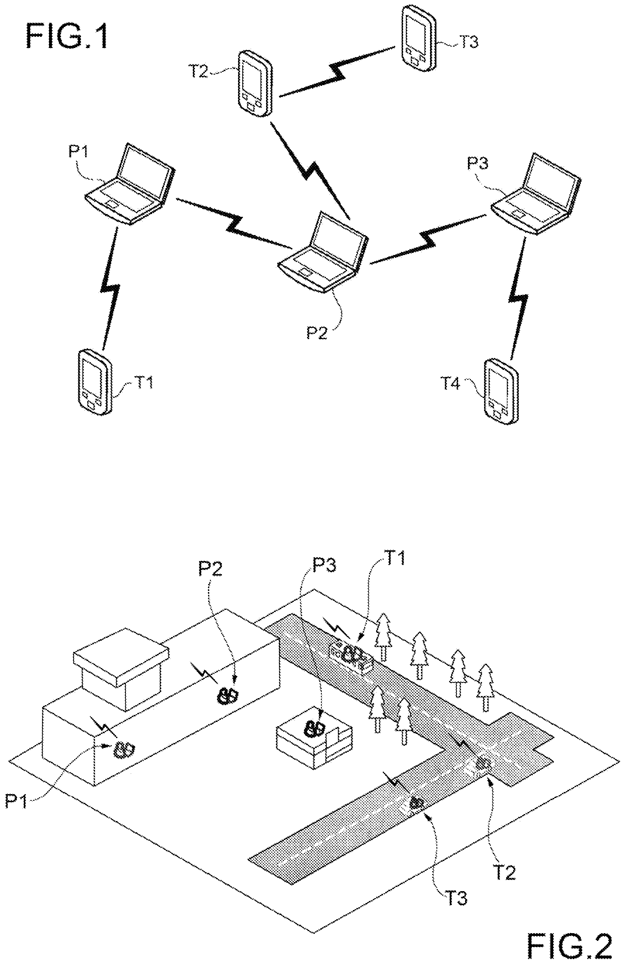

By way of example, Figure 1 shows a MANET network including a plurality of nodes composed of mobile terminals, such as the telephones T1-T4 and the portable computers P1-P3, in the possession of individuals or installed in vehicles. As a general rule, the devices forming the individual network nodes comprise processing means arranged to execute a method of transmitting data packets to other network nodes, comprising the assignment of an identifier of the destination node of the packet, based on a program or group of programs stored in a non-volatile memory module of the node device.

MANET networks are typically used in communication scenarios characterized by logistical difficulties or complex propagation environments, especially in situations requiring the rapid creation of a reliable emergency communication network among a limited number of terminals which are distributed over a territory and capable of moving in an arbitrary manner, in scenarios where a network infrastructure is absent or inoperative. For example, in the public field, MANET networks are used for communications management in areas in which natural disasters have occurred and the communications infrastructure has been destroyed, for communication between terminals mounted in rescue vehicles or in the possession of personnel engaged in rescue operations on the territory.

In a mobile network of processing terminals with no infrastructure, the method normally used for data transmission between terminals operating over long distances is high-frequency (HF) radio transmission. Since the transmission band is narrow, communication takes place on a simplex radio channel, and is based on a carrier sense multiple access (CSMA) protocol or variants thereof. The transmitted data are formatted as IP data packets and subsequently converted to serial data. Communication is typically of the broadcast type, or of the unicast type with the identification of the destination in a header of the data packet.

Before transmitting data, each terminal checks whether any other nodes are transmitting on the radio channel, and starts to transmit only if it detects that the channel is free; otherwise it waits for an arbitrary time before re-attempting the transmission.

To ensure the adequate reliability of communications on an HF radio channel in a MANET network, it is essential to use forward error correction (FEC) and interleaving methods. The use of these methods has the drawback of causing delays in the end-to-end transfer of data at a terminal, and therefore it is not unusual for a terminal to decide to transmit after finding that the radio channel available to the network is silent, only to discover subsequently that the channel has been occupied by a signal transmitted by another terminal at a time delayed as a result of forward error correction and interleaving processes. This increases the number of transmission collisions, thus considerably reducing the capacity of the HF channel, which is low in any case.

Furthermore, using the CSMA channel access method in HF may give rise to the problem of the "concealed terminal", which occurs when a third terminal is visible to a second terminal to which it intends to transmit, but not to a first, excessively distant, terminal, which is already occupying the channel by transmitting to the second terminal. This is a typical case in which conflict situations may arise, thus further reducing the channel capacity.

Ultimately, as the number of nodes in the network rises (to about ten or more), the CSMA method of access to the transmission resource ceases to be efficient, because it drastically increases the probability of collisions, since the transmission resource uses a narrow bandwidth.

EP 1 976 164 proposes a MANET network solution with mobile nodes accessing the transmission resources of the network by a TDMA method. The mobile nodes are synchronized by means of a clock signal (synchronizing signal) distributed via radio by a base station. Unfortunately, the base station is an essential part of the network infrastructure and is a typical point of failure. Any fault in the base station would irreparably compromise the functionality of the entire network, with the loss of the synchronizing signal for all the nodes. However, a MANET network typically has to provide assured operating capacity even if any node is absent. Furthermore, the periodic distribution of the synchronizing signal over the network itself consumes transmission resources which could otherwise be allocated to the transmission of useful data between the nodes.

US 2010/0329221 A1 discloses a method of dynamic planning of an ad hoc wireless network, based on a method of controlling the transmission mode between nodes of the network, wherein the nodes wishing to access the communication channel transmit an access request in CSMA/CA mode, after which a main node of the network is elected, this node dynamically assigning a plurality of transmission time slots by a TDMA method to the nodes that have submitted a transmission request.

Since the transmission time slots provided by the TDMA method are assigned dynamically, and the number of these slots is smaller than the number of nodes composing the network, the planning method disclosed in US 2010/0329221 A1 has the drawback of generating excessive radio traffic, even for non-useful data.

The object of the present invention is to provide a satisfactory solution to the problems outlined above, by proposing a method of data transmission for accessing to the radio channel of a MANET network operating in the HF frequency range which overcomes the drawbacks of the known art, in other words a method which avoids collisions between network nodes in transmission, while ensuring the robustness of the network and effective use of the transmission resources available to the network.

According to the present invention, this object is achieved by means of a method of transmission having the characteristics claimed in Claim 1.

Specific embodiments are described in the dependent claims, the content of which is to be considered as an integral part of the present description.

A further object of the invention is a node of a communication network, a MANET communication network, and a computer program arranged for executing a transmission method, as claimed.

Briefly, the present invention is based on the principle of using the simplex radio channel on the HF band available to the MANET network by sharing the time for access by the terminals, in other words by sharing the radio channel by a TDMA access method. The TDMA transmission method proposed by the invention makes it possible to transfer data efficiently between nodes of a MANET network each of which is equipped with a processing terminal and geographical positioning means associated with the terminal.

In the TDMA method, each node of the network is allocated a transmission time slot in a transmission frame within which it can use the channel and data can be transmitted, and outside which it sets itself to receive the data transmitted from the other nodes. To enable the time division multiplexing method to be implemented, the nodes must have a common time reference, which is a clock provided in the processing terminals of each node, synchronized with a universal reference time derived by the geographical positioning means with which the node is equipped, on the basis of a geographical positioning system, such as a satellite positioning and navigation system.

Advantageously, any possible temporary absence of the universal timing signal derived from the geographical positioning means does not compromise the communication, since the time reference clock of each terminal is sufficiently precise to ensure synchronization even in the absence of the universal reference time signal for prolonged periods.

Conveniently, according to a preferred embodiment of the invention, suitable arrangements are made to avoid a loss of synchronization of the clocks at the nodes of the network, these arrangements being adapted to make the transmission method applicable and effective in all circumstances. Each node of the network is arranged for transmitting data for an actual time which is shorter than the duration of the available time slot, the difference between the duration of the time slot and the effective transmission time being a configurable parameter.

Additionally, the number of transmission slots provided in a transmission frame is preferably greater than the planned number of nodes of the network, and consequently a transmitting node that detects the occupation of the channel in the time slot assigned to it (owing to an accidental overlap of the transmission time slots between two nodes of the network) is able to execute the transmission in a free time slot other than that assigned to it.

Further characteristics and advantages of the invention will be disclosed more fully in the following detailed description of one embodiment of the invention, provided by way of non-limiting example, with reference to the attached drawings, in which:

Figure 1 is a schematic representation of a MANET network, already described in the introductory part of this description;

Figure 2 is a pictorial representation of a MANET network in an urban environment;

Figure 3 is a block diagram of a network node; and
Figure 4 is a flow chart of the operations executed at a network node for the transmission of data according to the invention.

Figure 2 shows a MANET network or part thereof, planned in an urban environment in which, in a similar way to the example of the prior art discussed in the introductory part of the present description, P1-P3 indicate three nodes of the network formed by computers, possibly portable computers, and T1-T3 indicate three nodes formed by mobile terminals, such as telephones with data processing functionality, in the possession of individuals or installed in vehicles.

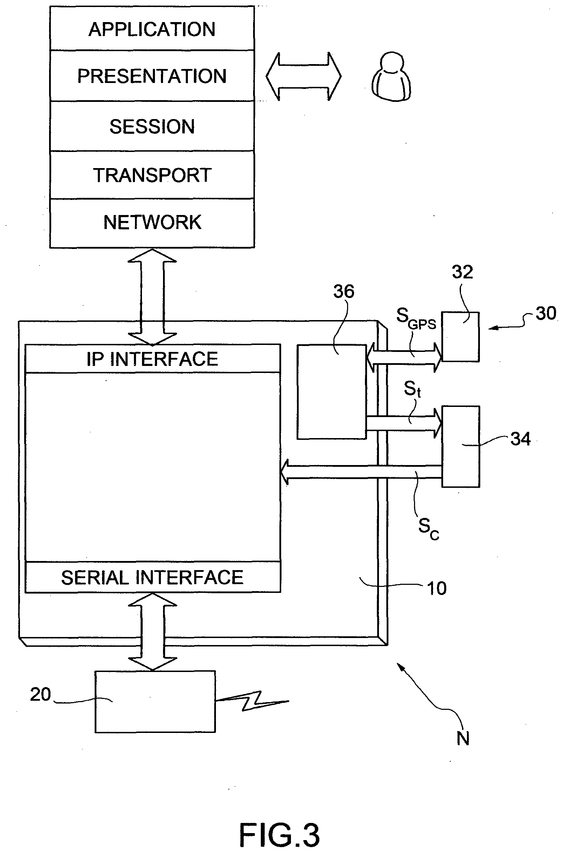

In general, each network node, identified hereafter simply as N, and shown in a block diagram in Figure 3 at the link layer, comprises a data processing terminal 10, a radio interface 20, and a timing interface 30. The processing terminal is, for example, a personal desktop or laptop computer, or a telephone apparatus. The radio interface 20 includes signal modulation/demodulation means and corresponding means for receiving and transmitting high-frequency signals, adapted to process the data to be transmitted on the network, or the data received from the network, according to the known radio communication methods and the standard communication protocols at the physical layer and the data link layer. The timing interface 30 includes a module for receiving geolocation signals 32, for example a GPS receiver, and an internal clock 34, for example the internal clock of a personal computer. The internal clock 34 is synchronized with a universal reference time $S_t$ correlated with the geolocation signals $S_{GPS}$ by means of a synchronizing module 36, and is arranged for supplying a clock signal $S_C$ to the terminal 10.

The data processing terminal 10 is arranged for executing groups or modules of locally stored processing and computing programs, which implement the method according to the invention, as described in detail below.

Finally, the invention also proposes a computer program, in particular a computer program stored on or in a data medium or memory, adapted to execute the transmission method proposed by the invention. This program may use any programming language, and may be in the form of source code, object code or an intermediate code between source and object code, for example in a partially compiled form, or in any other desired form for implementing the method according to the invention. The data medium may be any entity or device capable of storing the program. For example, the medium may comprise a storage means of a data processing terminal, such as a disc drive of a computer, or a ROM memory of a portable telephone.

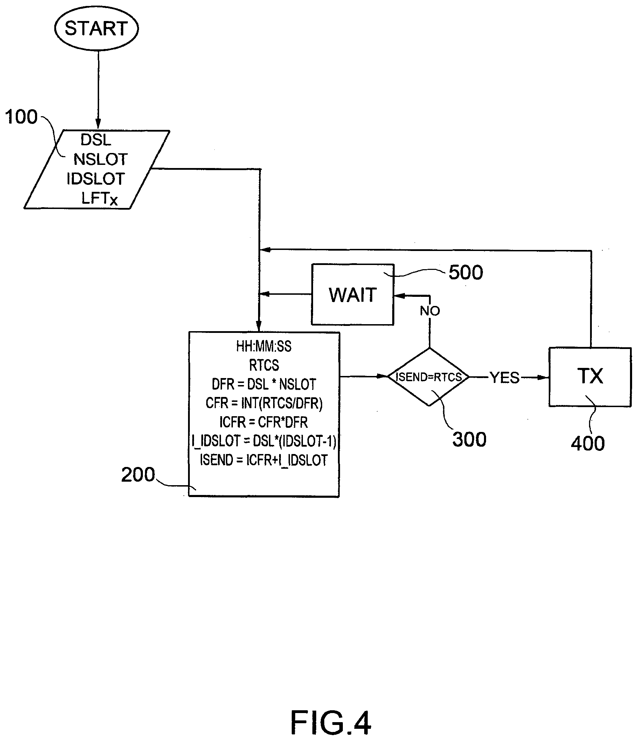

Figure 4 shows the flow chart representing the operations executed at a network node N by the data processing terminal 10 via the radio interface 20 and the timing interface 30.

At the time of activation, a network node N executes a series of initialization operations, including, at step 100, the reading of parameters for configuring the time sharing access to the channel, these parameters being defined in advance according to the number of nodes planned and the characteristics of the radio interface and being stored in the node at the time of network planning, examples of these parameters being a parameter indicating the duration of each transmission time slot, a parameter indicating the number of transmission slots, a parameter identifying the transmission time slot assigned to the node and a parameter (LFTx) indicating the duration of the end of transmission latency of the radio interface.

By means of the timing interface 30, in other words by means of the internal clock 34 synchronized to the universal time signal $S_t$, the node, knowing the clock signal $S_C$, then determines the current instant of time in step 200, with a granularity of one second, for example. On the basis of the current instant of time that is determined, the node also calculates the instant of time of the opening of the transmission time slot assigned to it during the planning of the network.

In step 300, the node compares the current instant of time with the instant of time of the opening of the transmission time slot assigned to it, calculated in the preceding step.

If the two instants of time correspond, the node configures itself to transmit the data that a user of the processing terminal intends to distribute to the network in step 400, buffered for serial transmission according to the known physical layer protocol.

Otherwise, if the two instants of time do not match, in step 500 the node sets itself to wait for a predetermined time, for example one second, and then repeats steps 200 and 300, that is to say the determination of the current instant of time and the comparison of this instant of time with the instant of time of the opening of the transmission time slot assigned to it.

A practical example of calculation at a network node is given below in the present description.

The following quantities are defined:

HH:MM:SS: hours, minutes, seconds of the clock of the processing terminal of the network node;

RTCS: reference time of the processing terminal of the network node (expressed in seconds), calculated as RTCS = HH*3600+MM*60+SS

A reference time interval, for example an astronomical day of 24 hours, is divided into equal time intervals,

4

shown as FRAME, and each FRAME is divided into equal time intervals or time slots, shown as SLOT.

Each node of the network is assigned a time slot SLOT, so that the node can transmit whenever its time slot starts and for a maximum period equal to the duration of the slot.

For example, we may assume that a day of 24 hours is divided into 24 FRAMEs, and each FRAME is divided into 60 SLOTs, each having a duration of one minute. As a general rule, it is then possible to plan a network of 60 nodes, the number of nodes being equal to the number of SLOTs, i.e. the possible transmission data without risk of collision, and therefore each node of the network can transmit once per hour, for not more than one minute.

The following parameters are then defined:

DFR — duration of FRAME in seconds
CFR — current FRAME in the reference time interval, i.e. 24 hours
ICFR — start of current FRAME
DSL — duration of SLOT in seconds
NSLOT — number of SLOTs contained in a FRAME
IDSLOT — identifier of SLOT of a specific node; for simplicity, it is assumed that
SLOT 1 — is assigned to node 1, SLOT 2 is assigned to node 2, and so on
I_IDSLOT — start of IDSLOT
ISEND — start of transmission of the node assigned to the time slot IDSLOT

Consequently the duration of a FRAME is equal to the duration of a SLOT multiplied by the number of SLOTs, according to the expression:

$$DFR = DSL*NSLOT$$

Therefore, the FRAME at a specified instant of the reference time interval (of the 24 hours) is equal to the integer part of the reference time determined at the processing terminal of the node, expressed in seconds, divided by the duration of the FRAME in seconds, according to the expression:

$$CFR = INT\ (RTCS/DFR)$$

The start of the current FRAME is then given by the current FRAME multiplied by its duration, according to the expression:

$$ICFR = CFR*DFR$$

The start of the SLOT of a specific node, IDSLOT, is equal to the duration of the SLOT multiplied by IDSLOT-1 (since the SLOTs are numbered from 0), according to the expression:

$$I\_IDSLOT = DSL*(IDSLOT-1)$$

and the instant of time of the start of transmission of a data packet by a specified node of the network, ISEND, is calculated by means of the expression:

$$ISEND = ICFR+I\_IDSLOT$$

The process of controlling the data transmission at a network node compares ISEND with RTCS at the end of each second, and the node starts to transmit when the two aforesaid quantities are equal, for a time not exceeding DSL. At the moment when it is verified that RTCS is equal to ISEND, the process verifies whether the radio channel is free, by monitoring the Carrier Detect of the modulation means arranged for sensing the carrier according to the CSMA method, in order to avoid possible conflicts.

The method is further explained by means of a numerical example:

Given a MANET network composed of 20 nodes, let us consider the fourth node, for example according to a network planning order, which has therefore been assigned the fourth SLOT of the 20 SLOTs (the same number as the number of nodes) which make up the FRAME, each SLOT having a duration of 30 s.

Let us consider the instant of time at which the clock of the processing terminal of the fourth node records the time of day as 07:20:10.

The time expressed in seconds is:

$$RTCS = 7*60*60+20*60+10 = 26410 \text{ s}$$

The duration of FRAME in seconds is equal to the duration of a SLOT multiplied by the number of SLOTs, i.e.:

$$DFR = 30*20 = 600 \text{ s}$$

In this exemplary case, the total number of FRAMEs is 144, and the current FRAME in the 24 hours is:

$$CFR = INT(26410/600) = INT(44.0166) = 44;$$

that is to say, the 44th FRAME of 144.

The instant of the start of the 44th FRAME, expressed in seconds from the start of the reference time interval, that is to say the day, can be calculated as the number of the FRAME multiplied by its duration:

$$ICFR = 44*600 = 26400 \text{ s}$$

The start of the fourth SLOT (IDSLOT = 3) is 90 s after the start of the 44th FRAME, because:

$$I\_IDSLOT = 30*3 = 90 \text{ s}$$

Therefore, the start of the transmission slot of the fourth node (having IDSLOT = 4) is given by:

$$ISEND = 26400+90 = 26490 \text{ s}$$

Since ISEND is different from RTCS, the node cannot transmit. RTCS and ISEND are recalculated once every second and compared, until the result of the comparison is positive.

In particular, after one second we find that:

$$RTCS = 26411$$

$$ISEND = 26490$$

After two seconds:

$$RTCS = 26412$$

$$ISEND = 26490$$

After 80 seconds:

$$RTCS = 26490$$

$$ISEND = 26490$$

At this point, since the condition RTCS = ISEND is true, the node can transmit for a time equal to or less than the duration of the SLOT (DSL), which in this example is 30 s. Owing to the lack of synchronization between nodes which may occur in the prolonged absence of the geolocation signal $S_{GPS}$, and because each node independently calculates the instant of the start of the time slot assigned to it for transmission, it may happen that one node decides that it can transmit on the network channel before the transmission time slot determined separately by a second node has been closed. This results in a condition of overlap of the time slots, in other words the overlap of SLOTs.

Advantageously, to make the method of transmission proposed by the invention more robust and effective, two corrective mechanisms are used, as follows:

1) Each node transmits data over the radio channel for an effective time which is less than the duration of the available time slot. The difference between the duration of the time slot and the effective transmission time is a configurable parameter, called end of transmission latency (LFTx), and clearly it must be less than the total duration of a transmission time slot.

In the preceding example, the transmission interval can be limited to 20 seconds, instead of being 30 s, for a DSL of 30 s.

2) If an accidental overlap occurs between transmission time slots of two different nodes of the network, the node transmitting the data, which detects the overlap, reconfigures itself on a free time slot which is made available at the time of network planning and is not uniquely assigned to a network node.

The second mechanism is provided by making available a predetermined number of predefined auxiliary free time slots SLOT (spare IDSLOTs), this number being configurable as desired at the time of network planning, and generally being dependent on the number of nodes which make up the network. The node which cannot transmit during the time slot assigned to it selects a free transmission slot in a random manner from among the predefined slots, for example from among those predefined for the specific node, and repeats steps 300 to 600 of the method.

It should be noted that the embodiment of the present invention proposed in the preceding discussion is provided purely by way of example and does not limit the present invention. A person skilled in the art can easily apply the present invention in different embodiments which do not depart from the principles described above, and which are therefore included in the present patent.

This is particularly true as regards the possibility of not assigning auxiliary free time slots, precisely identified in the communication frame, to each node in advance, but limiting the number of these slots and providing dynamic assignment of the auxiliary free time slots to the node which requests them. This would make it necessary to transmit control packets over the network to inform a node of the auxiliary slot that it must use, thereby increasing the non-useful traffic, which is a disadvantage in a communication system with limited bandwidth.

Additionally, spare time slots could be provided to allow the network to be extended to other nodes which were not initially planned. This operating mode must also provide for the transmission of control packets over the network to inform the new nodes of the spare slots assigned to them.

Naturally, the principle of the invention remaining the same, the forms of embodiment and details of construction may be varied widely with respect to those described and illustrated, which have been given purely by way of non-limiting example, without thereby departing from the scope of protection of the present invention as defined by the attached claims.

## Claims

1. Method of data transmission between nodes (P1-P3, T1-T3) of a MANET communication network on a high-frequency radio channel shared by division of the access time, comprising the determination of a time reference for access to the channel shared by the network nodes (P1-P3, T1-T3), including at each node (P1; P2; P3; T1; T2; T3) receiving a positioning signal ($S_{GPS}$) from a geographical positioning system (32) equipping said node (P1; P2; P3; T1; T2; T3), and determining a universal reference time ($S_t$) therefrom, **characterized in that**, at the time of network planning, each network node (P1; P2; P3; T1; T2; T3) is assigned a transmission time slot in a transmission frame, each of said nodes (P1-P3, T1-T3) being arranged for maintaining a local timing reference (Sc) for the determination of the corresponding transmission slot, and at least one auxiliary transmission slot in a transmission frame is provided, which is accessible by a node (P1; P2; P3; T1; T2; T3) that has detected the occupation of the radio channel in the time slot assigned to said node (P1; P2; P3; T1; T2; T3).

2. Method of data transmission according to Claim 1, comprising synchronizing a local clock (34) of each node (P1; P2; P3; T1; T2; T3) with said universal reference time ($S_t$).

3. Method of data transmission according to Claim 1 or 2, wherein each node (P1; P2; P3; T1; T2; T3) of the network transmits data on said radio channel for a duration less than the duration of the time slot assigned to said node (P1; P2; P3; T1; T2; T3).

4. Method of data transmission according to Claim 1, including, at each node (P1; P2; P3; T1; T2; T3), the verification of the availability of the radio channel by means of carrier sensing.

5. Method of data transmission according to Claim 1, comprising the assignment to each node (P1; P2; P3; T1; T2; T3) of at least one auxiliary transmission slot at the time of network planning.

6. Method of data transmission according to Claim 1, comprising the dynamic assignment to each node (P1; P2; P3; T1; T2; T3) of at least one auxiliary transmission slot.

7. Method of data transmission according to any one of the preceding claims, comprising, at each node (P1; P2; P3; T1; T2; T3), the determination of the current instant of time with a granularity of one second.

8. Method of data transmission according to any one of the preceding claims, comprising the provision of at least one spare transmission slot in a transmission frame, which can be assigned to a new network node (P1; P2; P3; T1; T2; T3).

9. Node (P1; P2; P3; T1; T2; T3) for a MANET communication network, adapted to transmit data on a high-frequency radio channel shared by division of the access time, said node (P1; P2; P3; T1; T2; T3) comprising clock means (34), the node (P1; P2; P3; T1; T2; T3) being equipped with means (32) for receiving a positioning signal ($S_{GPS}$) from a geographical positioning system, said means being adapted to provide a universal reference time ($S_t$) to said clock means (34),
**characterised in that** said node (P1; P2; P3; T1; T2; T3) is assigned a transmission time slot in a transmission frame at the time of network planning, **in that** said clock means (34) are designed to maintain a local time reference ($S_C$) for the determination of the corresponding transmission slot for access to the channel, and **in that** the node (P1; P2; P3; T1; T2; T3) is adapted to select and access an auxiliary transmission slot in a transmission frame in a random manner from among a predetermined number of slots predefined at the time of network planning when it detects the occupation of the radio channel in the transmission time slot assigned to it.

10. Mobile ad hoc communication network, MANET, without a fixed infrastructure, including a plurality of nodes (P1-P3, T1-T3) according to Claim 9.

11. Computer program or group of programs, arranged for running at nodes (P1-P3, T1-T3) of a MANET communication network for performing a transmission method according to any one of Claims 1 to 8.

**Patentansprüche**

1. Datenübertragungsverfahren zwischen Knoten (P1-P3, T1-T3) eines MANET-Kommunikationsnetzwerkes auf einem Hochfrequenzfunkkanal, der durch Aufteilung der Zugriffszeit geteilt wird, mit der Bestimmung einer Zeitreferenz für Zugriff auf den Kanal, der von den Netzwerkknoten (P1-P3, T1-T3) geteilt wird, einschließlich, an jedem Knoten (P1; P2; P3; T1; T2; T3), Empfangen eines Positionierungssignals ($S_{GPS}$) von einem geographischen Positionierungssystem (32), das besagten Knoten (P1; P2; P3; T1; T2; T3) ausstattet, und Bestimmen einer universellen Referenzzeit ($S_t$) daraus,
**dadurch gekennzeichnet, dass** zu der Zeit von Netzwerkplanung jedem Netzwerkknoten (P1; P2; P3; T1; T2; T3) ein Übertragungszeitfenster in einem Übertragungsrahmen zugeordnet wird, bei dem jeder von besagten Knoten (P1-P3, T1-T3) zum Beibehalten einer lokalen Zeitreferenz (Sc) für die Bestimmung des entsprechenden Übertragungsfensters angeordnet ist, und mindestens ein Hilfsübertragungsfenster in einem Übertragungsrahmen vorgesehen ist, das durch einen Knoten (P1; P2; P3; T1; T2; T3) zugänglich ist, der die Belegung des Funkkanals in dem Zeitfenster, das besagtem Knoten (P1; P2; P3; T1; T2; T3) zugeordnet ist, erfasst hat.

**2.** Datenübertragungsverfahren nach Anspruch 1, mit Synchronisieren einer lokalen Uhr (34) jedes Knotens (P1; P2; P3; T1; T2; T3) mit besagter universeller Referenzzeit ($S_t$).

**3.** Datenübertragungsverfahren nach Anspruch 1 oder 2, bei dem jeder Knoten (P1; P2; P3; T1; T2; T3) des Netzwerks Daten auf besagtem Funkkanal für eine Dauer von weniger als die Dauer des Zeitfensters, das besagtem Knoten (P1; P2; P3; T1; T2; T3) zugeordnet ist, überträgt.

**4.** Datenübertragungsverfahren nach Anspruch 1, einschließlich, an jedem Knoten (P1; P2; P3; T1; T2; T3), der Verifikation der Verfügbarkeit des Funkkanals mittels Trägerabtastung.

**5.** Datenübertragungsverfahren nach Anspruch 1, mit der Zuordnung mindestens eines Hilfsübertragungsfensters zu jedem Knoten (P1; P2; P3; T1; T2; T3) zu der Zeit von Netzwerkplanung.

**6.** Datenübertragungsverfahren nach Anspruch 1, mit der dynamischen Zuordnung mindestens eines Hilfsübertragungsfensters zu jedem Knoten (P1; P2; P3; T1; T2; T3).

**7.** Datenübertragungsverfahren nach einem der vorhergehenden Ansprüche, mit, an jedem Knoten (P1; P2; P3; T1; T2; T3), der Bestimmung des gegenwärtigen Zeitpunkts mit einer Genauigkeit von einer Sekunde.

**8.** Datenübertragungsverfahren nach einem der vorhergehenden Ansprüche, mit dem Vorsehen mindestens eines freien Übertragungsfensters in einem Übertragungsrahmen, das einem neuen Netzwerkknoten (P1; P2; P3; T1; T2; T3) zugeordnet werden kann.

**9.** Knoten (P1; P2; P3; T1; T2; T3) für ein MANET-Kommunikationsnetzwerk, der dazu angepasst ist, Daten auf einem Hochfrequenzfunkkanal, der durch Aufteilung der Zugriffszeit geteilt wird, zu übertragen, welcher besagte Knoten (P1; P2; P3; T1; T2; T3) ein Uhrmittel (34) aufweist, welcher Knoten (P1; P2; P3; T1; T2; T3) mit einem Mittel (32) zum Empfangen eines Positionierungssignals ($S_{GPS}$) von einem geographischen Positionierungssystem ausgestattet ist, welches Mittel dazu angepasst ist, besagtem Uhrmittel (34) eine universelle Referenzzeit ($S_t$) zur Verfügung zu stellen,

**dadurch gekennzeichnet, dass** besagtem Knoten (P1; P2; P3; T1; T2; T3) ein Übertragungszeitfenster in einem Übertragungsrahmen zu der Zeit von Netzwerkplanung zugeordnet wird, dass besagtes Uhrmittel (34) dazu ausgebildet ist, eine lokale Zeitreferenz ($S_C$) für die Bestimmung des entsprechenden Übertragungsfensters für Zugriff auf den Kanal beizubehalten, und dass der Knoten (P1; P2; P3; T1; T2; T3) dazu angepasst ist, ein Hilfsübertragungsfenster in einem Übertragungsrahmen in einer zufälligen Weise aus einer vorherbestimmten Anzahl von Fenstern, die zu der Zeit von Netzwerkplanung vordefiniert sind, auszuwählen und darauf zuzugreifen, wenn er die Belegung des Funkkanals in dem Übertragungszeitfenster, das ihm zugeordnet ist, erfasst.

**10.** Mobiles Ad-hoc-Kommunikationsnetzwerk, MANET, ohne eine feste Infrastruktur, mit einer Mehrzahl von Knoten (P1-P3, T1-T3) nach Anspruch 9.

**11.** Computerprogramm oder Gruppe von Programmen, die zum Laufen an Knoten (P1-P3, T1-T3) eines MANET-Kommunikationsnetzwerkes angeordnet sind, zum Durchführen eines Übertragungsverfahrens nach einem der Ansprüche 1 bis 8.

## Revendications

**1.** Procédé de transmission de données entre des noeuds (P1-P3, T1-T3) d'un réseau de communication MANET sur un canal radio haute fréquence partagé par division du temps d'accès, comprenant la détermination d'une référence temporelle pour l'accès au canal partagé par les noeuds de réseau (P1-P3, T1-T3), comprenant au niveau de chaque noeud (P1 ; P2 ; P3 ; T1 ; T2 ; T3) la réception d'un signal de positionnement ($S_{GPS}$) en provenance d'un système de positionnement géographique (32) équipant ledit noeud (P1; P2 ; P3 ; T1 ; T2 ; T3), et la détermination d'un temps de référence universel ($S_t$) à partir de celui-ci,

**caractérisé en ce que**, au moment de la planification du réseau, chaque noeud de réseau (P1 ; P2 ; P3 ; T1 ; T2 ; T3) se voit assigner un créneau temporel de transmission dans une trame de transmission, chacun desdits noeuds (P1-P3, T1-T3) étant agencé pour maintenir une référence de positionnement temporel local ($S_C$) pour la détermination du créneau de transmission correspondant, et au moins un créneau de transmission auxiliaire dans une trame de transmission est fourni, qui est accessible par un noeud (P1; P2 ; P3 ; T1 ; T2 ; T3) qui a détecté l'occupation du canal radio dans le créneau temporel assigné audit mode (P1 ; P2 ; P3 ; T1 ; T2 ; T3).

2. Procédé de transmission de données selon la revendication 1, comprenant la synchronisation d'une horloge locale (34) de chaque noeud (P1 ; P2 ; P3 ; T1 ; T2 ; T3) avec ledit temps de référence universel ($S_t$).

3. Procédé de transmission de données selon la revendication 1 ou 2, dans lequel chaque noeud (P1 ; P2 ; P3 ; T1 ; T2 ; T3) du réseau transmet des données sur ledit canal radio pendant une durée inférieure à la durée du créneau temporel assigné audit noeud (P1 ; P2 ; P3 ; T1 ; T2 ; T3).

4. Procédé de transmission de données selon la revendication 1, comprenant, au niveau de chaque noeud (P1 ; P2 ; P3 ; T1 ; T2 ; T3), la vérification de la disponibilité du canal radio au moyen d'une détection de porteuse.

5. Procédé de transmission de données selon la revendication 1, comprenant l'assignation à chaque noeud (P1 ; P2 ; P3 ; T1 ; T2 ; T3) d'au moins un créneau de transmission auxiliaire au moment de la planification du réseau.

6. Procédé de transmission de données selon la revendication 1, comprenant l'assignation dynamique à chaque noeud (P1 ; P2 ; P3 ; T1 ; T2 ; T3) d'au moins un créneau de transmission auxiliaire.

7. Procédé de transmission de données selon l'une quelconque des revendications précédentes, comprenant, au niveau de chaque noeud (P1 ; P2 ; P3 ; T1 ; T2 ; T3), la détermination de l'instant de temps actuel avec une granularité d'une seconde.

8. Procédé de transmission de données selon l'une quelconque des revendications précédentes, comprenant la fourniture d'au moins un créneau de transmission de réserve dans une trame de transmission, qui peut être assigné à un nouveau noeud de réseau (P1 ; P2 ; P3 ; T1 ; T2 ; T3).

9. Noeud (P1 ; P2 ; P3 ; T1 ; T2 ; T3) pour un réseau de communication MANET, adapté pour transmettre des données sur un canal radio haute fréquence partagé par division du temps d'accès, ledit noeud (P1 ; P2 ; P3 ; T1 ; T2 ; T3) comprenant des moyens d'horloge (34), le noeud (P1 ; P2 ; P3 ; T1 ; T2 ; T3) étant équipé de moyens (32) pour recevoir un signal de positionnement ($S_{GPS}$) en provenance d'un système de positionnement géographique, lesdits moyens étant adaptés pour fournir un temps de référence universel ($S_t$) auxdits moyens d'horloge (34), **caractérisé en ce que** ledit noeud (P1 ; P2 ; P3 ; T1 ; T2 ; T3) se voit assigner un créneau temporel de transmission dans une trame de transmission au moment de la planification du réseau, **en ce que** lesdits moyens d'horloge (34) sont conçus pour maintenir une référence de temps local ($S_C$) pour la détermination du créneau de transmission correspondant pour l'accès au canal, et **en ce que** le noeud (P1 ; P2 ; P3 ; T1 ; T2 ; T3) est adapté pour sélectionner et accéder à un créneau de transmission auxiliaire dans une trame de transmission de manière aléatoire parmi un nombre prédéterminé de créneaux prédéfinis au moment de la planification du réseau lorsqu'il détecte l'occupation du canal radio dans le créneau temporel de transmission qui lui est assigné.

10. Réseau de communication ad hoc mobile, MANET, sans infrastructure fixe, comprenant une pluralité de noeuds (P1-P3, T1-T3) selon la revendication 9.

11. Programme informatique ou groupe de programmes, agencé pour s'exécuter au niveau de noeuds (P1-P3, T1-T3) d'un réseau de communication MANET pour effectuer un procédé de transmission selon l'une quelconque des revendications 1 à 8.

FIG.1

FIG.2

FIG.3

FIG.4

**EP 2 745 437 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1976164 A

- US 20100329221 A1